Europäisches Patentamt

European Patent Office

Office européen des brevets

Publication number: **0 316 106**
**A1**

# EUROPEAN PATENT APPLICATION

Application number: 88310309.5

Int. Cl.⁴: **A61C 7/00**

Date of filing: 02.11.88

Priority: 10.11.87 US 119391

Date of publication of application:
17.05.89 Bulletin 89/20

Designated Contracting States:
DE FR GB IT

Applicant: **ORMCO CORPORATION**
**1332 South Lone Hill Avenue**
**Glendora California 91740(US)**

Inventor: **Kidd, Patrick David**
**1629 Yorkshire Ct.**
**San Dimas California 91773(US)**
Inventor: **Sterrett, Terry Lee**
**5302 Abbeyfield**
**Long Beach California 90815(US)**
Inventor: **Sirney, Ronald James**
**828 West Mallory Drive**
**Bloomington California 92316(US)**

Representative: **Oliver, Roy Edward et al**
**POLLAK MERCER & TENCH High Holborn**
**House 52-54 High Holborn**
**London WC1V 6RY(GB)**

Orthodontic tensioning device dispenser.

An orthodonic tensioning device dispenser and method of making same. The orthodonic dispenser (10) comprises an elongated strip of material having a plurality of orthodontic tensioning device (12) cut therein.

FIG.3

## ORTHODONTIC TENSIONING DEVICE DISPENSER

### BACKGROUND OF THE INVENTION

This invention relates to a tensioning dispensing device which is particularly useful in orthodontic practice.

During orthodontic treatment typically an arch wire is used to apply corrective forces to a tooth through the use of an orthodontic bracket which is directly adhered to the tooth. Typically an O-ring made of an elastic type material is used for firmly engaging the arch wire to the orthodontic bracket. There are two general methods by which orthodontic O-rings are produced. The first involves chopping O-rings from a continuously extruded tubing thereby forming a plurality of individual O-rings which are later ligated onto the bracket. The second method involves injection molding O-rings on a straight or circular runner as is illustrated in U.S. Patent Nos. 4,217,686; U.S. 4,038,753; and 4,414,820. The O-rings produced by extruding are relatively inexpensive to produce, however, are difficult to handle due to their small size. The O-rings that are molded, while generally convenient are more expensive due to the cost of tooling and limited production runs. Additionally, the molding operation limits the type of materials that can be used for O-rings. Another problem with O-rings molded on the runner is that the Orthodontist often finds himself with runners at several workstations with quite a few remaining O-rings left on them. Additionally the molded O-rings, because of the way which the are kept, require a substantial amount of storage space in relation to the number of O-rings stored.

Applicants have invented an improved orthodontic dispensing device which is low cost in manufacture, has a wide versatilty of the type of materials than can be used, requires little space to store, and minimumizes the amount of wasted devices that are left over after a treatment.

### SUMMARY OF THE PRESENT INVENTION

In one aspect of the present invention, there is provided an orthodontic tensioning device dispenser which comprising an elongated strip of material having a plurality of orthodontic tensioning devices cut therein.

In another aspect of the present invention there is. provided a method of manufacturing a dispensing apparatus for dispensing a pluarality of orthodontic tensioning devices comprising the steps of: cutting a plurality of tensioning devices in a strip of material so that each orthodontic tensioning device is connected to the strip by a breakable connection.

### DESCRIPTION OF THE DRAWINGS

Figure 1 is a top plan view of a portion of an orthodontic tensioning device made in accordance with the present invention;

Figure 2 is a side view of Figure 1 taken along line 2-2;

Figure 3 is a perspective view of the dispensing device of Figure 1, illustrating how a tensioning device can be removed therefrom;

Figure 4 is top plan view illustrating how the dispensing device of the present invention can be made;

Figure 5 is a plan view of a portion of a modified orthodontic tensioning dispensing device made in accordance with the present invention;

Figure 6 is a front view, partially broken away of a container for holding the tension dispensing device of Figure 1;

Figure 7 is a side view of the container of Figure 6; and

Figure 8 is a top plan view of a portion of a modified tensioning dispensing device also made in accordance with the present invention.

### DETAILED DESCRIPTION OF INVENTION

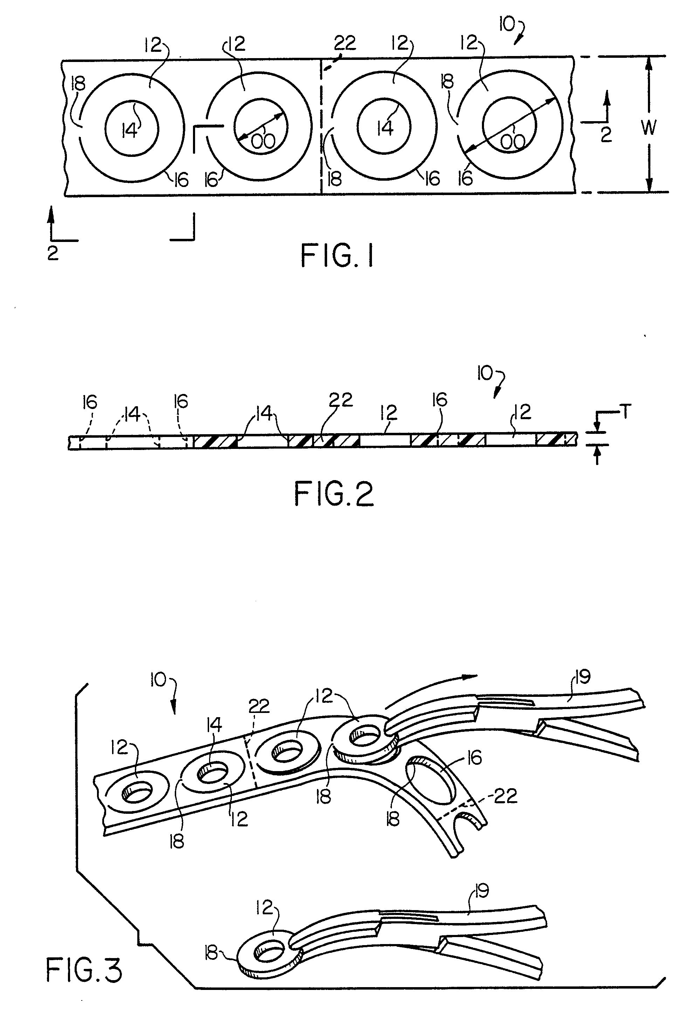

Referring to Figures 1 and 2, there is illustrated a portion of an orthodontic tensioning dispensing device 10. The dispensing device 10 comprises an elongated elastomer strip of material having a plurality of tensioning devices such as O-rings 12 substantially cut therein. The strip may be made out of any material capable of being formed into a strip, preferably the elastomer strip is made of a material having a Shore A hardness between 60 and 95 and a 300% modulus of elasticity between 150 and 2100 PSI. This allows the O-ring to be made of materials which are generally difficult to extrude or mold.

In the particular embodiment illustrated. the elongated strip of material is made of a thermoplastic polyurethane elastomer. However, the present invention can easily be used with other types of thermoplastic or thermosetting materials, for example, but not by way of limitation, thermoplastic polyester elastomer, styrene budadiene rubber, silicone rubber, cross-linked thermoset polyurethane elastomer, and cross-linked ethylene-propylene and butyl rubbers. The use of a thermoset material provides the opportunity of using materials having improved tensile properties and resilence. Theromsets are, however, more difficult to process since they are most usually two component liquid systems which must be mixed, de-aerated and poured into a mold. Such a process in a molded product which is more costly due to the high degree of difficulty in molding and slow process time. The present invention, however, allows for the use of virtually any material since a strip can be fabricated from which the parts may be die cut, thus yielding a substantial improvement in the choice of materials from which such devices can be manufactured.

Substantially, the entire configuration of the O-rings 12 are cut into the elastomer strip by any appropriate cutting means. The elastomer strip has a width W and a thickness T. The width W and thickness T are selected so as to provide the appropiate size and strength desired to the O-ring. In the particular embodiment illustrated width W of the elastomer strip is approximately .15 inches and the thickness T is approximately .030 inches. However, the width W and thickness T may be selected as desired. Typically, orthodontic O-rings have an inside diameter size ranging from about .040 to 0.055 inches and an outside diameter size ranging from about .090 to .120 inches. In the embodiement illustrated, the inside diamater DI is about .05 inches and the outside diameter DO is about .10 inches. Here as in the size of the strip, the size of the O-ring may be any size desired.

The outline of O-rings 12 are formed by a first inner cut line 14 which forms the inner opening of the O-ring 12. A second outer cut line 16 which extends substantially around the periphery of the O-ring, but stops short so as to provide a connecting breakable portion 18 which maintains the O-rings firmly on to the dispensing device 10. Cut lines 14 and 16 are simple cuts in the strip of material which extend through the entire thickness T. The thickness T of the connecting breakable portion 18 is large enough to maintain the O-ring on the dispensing device 10, yet small enough so as to allow easy removal therefrom For example, by pulling O-ring 12 with a hemostat as shown in Figure 3. Applicants have found that only one breakable portion 18 is generally required, however the present invention is not so limited. For example, but not by way of limitation, two or more breakable connecting portions may be provided.

Referring to Figure 3, there is illustrated the dispensing device 10 deformed so as to assist in dispensing O-rings 12. Placing the strip in this configuration assists in removing the O-rings 12 from the dispensing device 10. While the connecting portion 18 may be placed at any point along the outer periphery of the O-ring, connecting portion 18 is preferably located in the rear portion so as to allow the O-ring to be easily picked off the dispensing device 10 by the orthodontist as illustrated. In the upper portion of figure 3, a hemostat 19 is used to remove the O-ring 12. The lower portion of figure 3 illustrates an O-ring 12 completely removed in a hemostat ready for ligation onto a bracket.

The elongated strip of material may be as long as desired. In order to make it convenient for the orthodontist to remove as many O-rings as desired from the dispensing device 10, break lines 22 are provided periodically along the length of the elastomer strip. Break lines 22 are formed by providing at least one cut line across the width W so as to cause the strip to break along the break line 22. In the particular embodiment illustrated, a plurality of short cuts are provided through the thickness T of the strip of material spaced apart by a short distance. The break lines 22 may be provided as frequently as desired to enable the orthodonist to cut off approximately as many as needed at that time. In the particular embodiment illustrated break lines 22 are provided every third O-ring 12. Therefore if only a couple are needed only one segment of the elastomeric strip is taken, however, should ten or twenty O-rings be necessary an appropriate number of segments could be taken so as to provide the minimum number of O-rings desired.

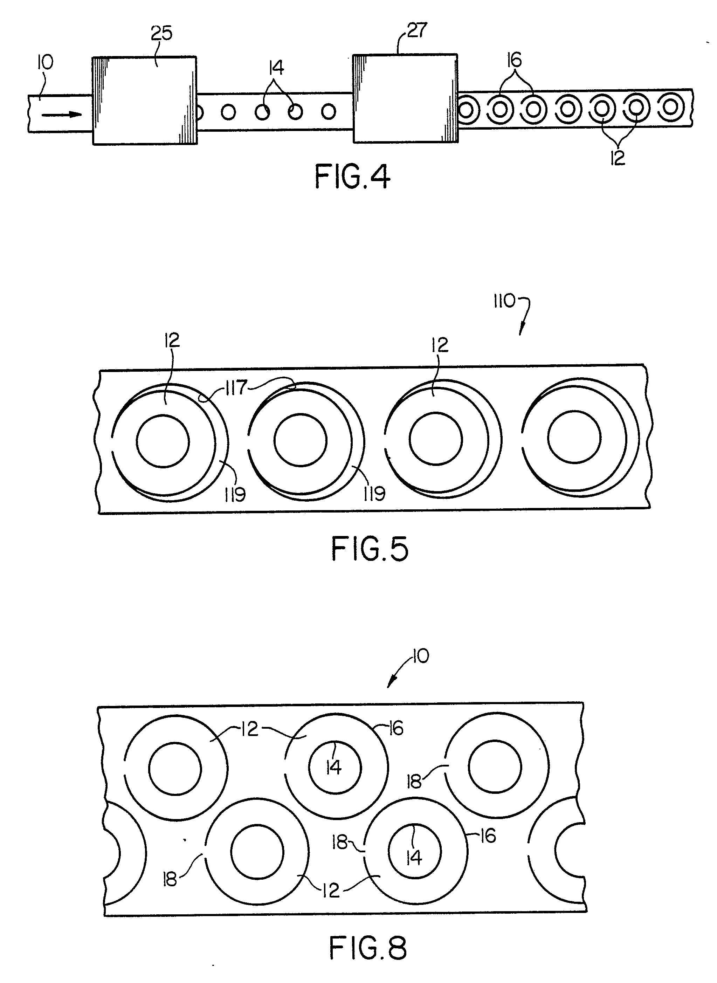

Referring to Figure 4, there is illustrated one method in which O-rings 12 may be formed in the dispensing device 10 can be made. An elastomeric strip of material of an appropriate width is passed through a first cutting operation where a pair of dies 25 (only top die can be seen as lower die 25 is directly below) produce the inner cut line 14. The dies 25 simply come together clamping the strip there between and providing cuts which extend through the material so as to provide inner cut line 14. Once the cut is made the dies 25 are retracted and the dispensing device 10 is moved to a second position where the outer cut 16 is made by a pair of dies 27 coming together (only top die can be seen as lower die is directly below) Any conventional type of cutting dies may be used to form cut dies 14, 16.

In the preferred form of the present invention, the cut lines 14, 16 are formed by cutting dies 25, 27, however, the present invention is not limited to such. For example, but then not by way of limitation, use of a circular rotating cutting wheel could be used to cut both the inner cut line 14 and outer cut line 16, at the same time Alternatively, a laser cutting device may be used to produce cut lines 14, 16 or break lines 22.

Referring to Figure 5, there is illustrated a modified orthodontic tensioning dispensing device 110 also made in accordance with the present invention. Dispensing device 110 is similar to dispensing device 10 of Figure 1 except that a wider second cut line 117 is placed around the O-ring 12 to provide an open space 19 around a portion of O-ring 12 so as to provide easier access to the O-ring and easier removal thereof. This may be a particular advantage when the elastomer strip is made out of a harder material which is not as easily bent as illustrated in Figure 3.

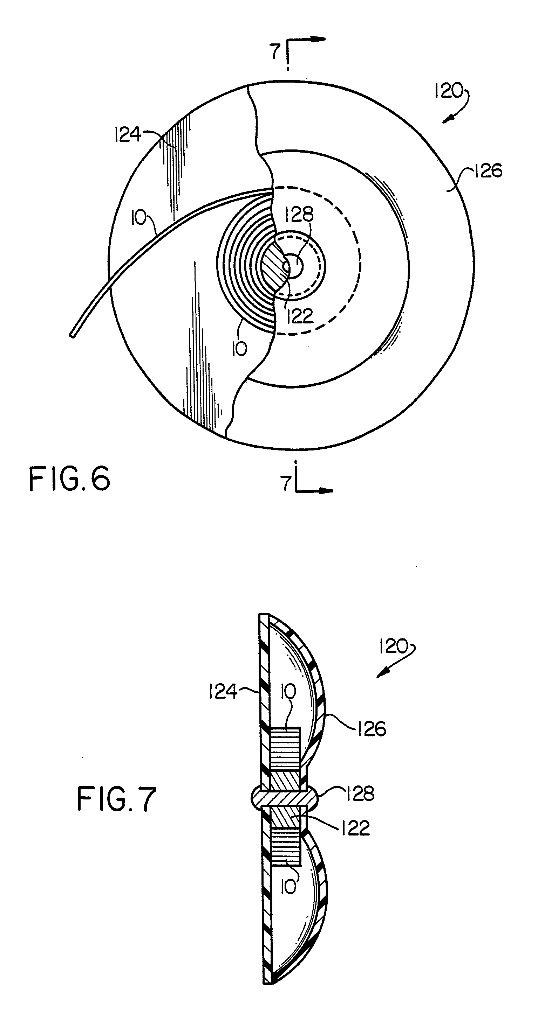

Referring to Figures 6 and 7, there is illustrated a container 120 having a dispenser 10 rolled about an axial support 122. The container 120 comprises a back portion 124 and front portion 126 which are secured by a rivet 128. The dispenser is simply spirally wrapped about the axial support 122 so as to substantially fill the container 120. It is quite apparent that the size and shape of the container can be varied to accomodate any desired length of dispensing device 10. Additionally, in the particular embodiment illustrated, container 120 is designed to hold approximately 1,000 O-rings. In the particular embodiment illustrated, back portion 124 and front portion 128 are made of a flexible plastic material such that the dispensing device 10 can be simply unraveled by pulling the free end thereof. An important advantage of the container 120 is that only the desired number of O-rings are removed. This permits the sterility of the other O-rings remaining in the container 120 to be maintained. The container 120 is only but one particular form which the container 120 may take. The particular configuration of the container 120 may be varied as desired.

In the embodiments illustrated in figures 1 and 5. the O-rings are aligned one behind the other. However. if desired, the O-rings may be staggered about the elastomeric strip as illustrated in Figure 8. Like numerals indicating like parts as previously discussed.

In the embodiment illustrated. the orthodontic tensioning devices formed in the strip of material are Orthodontic O-rings. However, other tensioning devices may be dispensed from dispensing device 10. For example, but not by way of limitation. class two type orthodontic devices such as illustrated in U.S. 4.330,271 may be made using the teachings of the present invention.

It is to be understood that various modifications can be made to the present invention without departing from this scope of the present invention. The scope of the present invention being limited by the attached claims.

## Claims

1. An orthodontic tensioning dispensing device comprising:
an elongated elastomer strip of material: and
a plurality of orthodontic tensioning devices substantially cut therein.

2. An orthodontic tensioning dispensing device according to claim 1 wherein said plurality of orthodontic tensioning devices are connected by at least one breakable portion.

3. An orthodontic tensioning dispensing device according to claim 1 wherein said elongated elastomeric strip is made of material have a Shore A hardness between 60 and 95 and a 300% modulus of elasticity between 150 and 2100 PSI.

4. An orthodontic tensioning dispensing device according to claim 1 wherein said elongated strip of material has a plurality of orthodontic O-rings substantially cut therein.

5. An orthodontic tensioning dispensing device according to claim 4 wherein said tensioning devices are connected to said dispenser by at least one breakable connecting portion.

6. An orthodontic tensioning dispensing device according to claim 4 wherein said elastomeric material has a Shore A hardness between 60 and 95 and a 300% modulus of elasticity between 150 and 2100 PSI.

7. An orthodontic tensioning dispensing device comprising an elongated elastomeric strip of material having a plurality of orthodontical O-rings substantially cut therein, said orthodontic O-rings are connected to said strip by a breakable portion.

8. A method of manufacturing an orthodontic tensioning dispensing device comprising the steps: cutting a plurality of tensioning devices in a strip of material so that each orthodontic tensioning device is connected to said strip by a breakable connection.

9. A method of manufacturing a plurality of orthodontic O-rings out of an elastomeric strip of material comprising the steps of:
making a first center cut to provide the center opening in each of said O-rings; and
making a second cut to provice substantially outer configuration of said O-ring.

10. A method according to claim 9 further comprising the step of providing a plurality of longitudinally spaced axially cuts so as to allow separation of longitudinal sections of said strips.

FIG.1

FIG.2

FIG.3

FIG.4

FIG.5

FIG.8

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | US-A-4 038 753 (KLEIN) | | A 61 C 7/00 |
| A | US-A-3 472 365 (TIEDEMA) | | |

**TECHNICAL FIELDS SEARCHED (Int. Cl.4)**

A 61 C
B 65 D

The present search report has been drawn up for all claims

| Place of search | Date of completion of the search | Examiner |
|---|---|---|
| THE HAGUE | 10-02-1989 | VANRUNXT J.M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)